# EUROPÄISCHE PATENTSCHRIFT

(11) **EP 2 304 150 B1**
(45) Veröffentlichungstag und Bekanntmachung des Hinweises auf die Patenterteilung: **13.08.2014**
(21) Anmeldenummer: 09779972.0
(22) Anmeldetag: 26.06.2009
(51) Int. Cl.: E05F 11/48, E05F 11/38

(54) **BAHNGESTEUERTER FENSTERHEBER EINES KRAFTFAHRZEUGS**
PATH-CONTROLLED WINDOW LIFTER OF A MOTOR VEHICLE
LÈVE-VITRES À COMMANDE CONTINUE D UN VÉHICULE AUTOMOBILE

(30) Priorität: 09.07.2008 DE 102008032963; 03.11.2008 DE 202008014665 U
(43) Veröffentlichungstag der Anmeldung: 06.04.2011
(73) Patentinhaber: Brose Fahrzeugteile GmbH & Co. KG, Hallstadt, 96103 Hallstadt (DE)
(72) Erfinder: RIETDIJK, Dalibor, 35584 Wetzlar (DE)
(74) Vertreter: Ninnemann, Detlef
(86) Internationale Anmeldenummer: PCT/EP2009/058048
(87) Internationale Veröffentlichungsnummer: WO 2010/003841

(56) Entgegenhaltungen:
- WO-A-2004/020770
- WO-A2-03/045736
- DE-A1- 10 144 777
- DE-A1- 10 144 779
- DE-A1- 19 838 347
- DE-B4- 10 239 447
- DE-U1-202004 010 955
- US-A- 4 633 613

## Beschreibung

Die Erfindung betrifft einen bahngesteuerten Fensterheber eines Kraftfahrzeugs gemäß dem Oberbegriff des Anspruchs 1.

Bahngesteuerte Fensterheber werden unter anderem zum Verstellen von Fensterscheiben für rahmenlose Türen eines Kraftfahrzeugs, insbesondere für Cabriolets, eingesetzt. Neben der Hauptverstellbewegung in Abzugsrichtung der Fensterscheibe, d. h. im Wesentlichen in Richtung der Hoch- oder Z-Achse des Kraftfahrzeugs, dient eine Führungsbahn zur Führung eines mit der Fensterscheibe verbundenen Mitnehmers und damit der Fensterscheibe in Richtung der Y-Achse des Kraftfahrzeugs, d. h. senkrecht zur X-Achse oder Fahrzeuglängsachse und Z-Achse des Kraftfahrzeugs. Die Führung in Y-Richtung des Kraftfahrzeugs wird genutzt, um zum vollständigen Schließen der Fensterscheibe die Fensterscheibe nach innen gegen eine Dichtung zu drücken und so ein sicheres Schließen der Fensterscheibe zu gewährleisten. Hierzu kann der bahngesteuerte Fensterheber zusätzlich kleine Verstellbewegungen in X- und Y-Richtung des Kraftfahrzeugs ausführen, die durch den Verlauf der Führungsbahnen definiert sind.

Derartige bahngesteuerte Fensterheber weisen eine großflächige Grund- oder Grundplatte aus Metallblech auf, in die zwei oder meist drei Führungsbahnen als profilierte Schlitze eingestanzt sind. Da die Grundplatte über die gesamte Führungslänge auf diese Weise zerschnitten wird, sind zum einen Brücken als Verbindung beider Seiten der Führungsbahnen notwendig, zum anderen muss das Metallblech dickwandig ausgelegt werden, um der Grundplatte die erforderliche Stabilität und insbesondere Eigensteifigkeit zu verleihen. Dies wiederum bedingt ein hohes Gewicht des bahngesteuerten Fensterhebers und damit eine unerwünschte Gewichtszunahme des Kraftfahrzeugs.

Aus der DE 101 44 777 A1 ist ein bahngesteuerter Fensterheber mit einer im Kraftfahrzeug befestigten Grundplatte bekannt, die drei Führungsbahnen zur Führung und zur Verstellung eines Mitnehmers entlang eines durch die Führungsbahnen gebildeten Verstellweges aufweist. Der Verlauf der einzelnen Führungsbahnen ist dabei unterschiedlich, je nach dem in welche Position die Fensterscheibe während der Verstellung bewegt werden soll. Um ein Durchbrechen der Struktur der Grundplatte zu vermeiden, was zu einer Schwächung der mechanischen Stabilität der Grundplatte führen würde, die zur Aufnahme der auf die Grundplatte einwirkenden Verstellkräfte aber erforderlich ist, wird entweder die mittlere der drei Führungsbahnen auf die Grundplatte aufgesetzt und bildet einen integralen Bestandteil der Grundplatte oder es wird eine Führungsbahn als separates Teil auf der Grundplatte durch Verrasten, Verschrauben, Verkleben oder Verpressen befestigt. Dabei ist die als einstückiger Bestandteil der Grundplatte ausgebildete Führungsbahn einteilig mit tragenden Strukturelementen der Grundplatte verbunden, so dass die auf die Führungsbahn wirkenden Kräfte von den Strukturelementen der Grundplatte aufgenommen werden können.

Weiterhin kann die Grundplatte mehrteilig ausgebildet und die mittlere Führungsbahn in einen Teil der Grundplatte integriert werden. Alternativ zu einer Insert- oder Outsert-Technik wird eine Kunststoff-Metall-Hybrid-Bauweise vorgeschlagen, um die Struktur einer mehrteiligen Grundplatte herzustellen. Zwischen den verschiedenen Teilen der Grundplatte dienen Befestigungen, wie Form-, Kraft- oder Stoffschlüsse, zur Erhöhung der Steifigkeit der Gesamtstruktur. Ein profiliertes Metallblech wird hierzu von Kunststoff zumindest teilweise umspritzt und durch Rippen des Kunststoffs versteift.

Aus der DE 198 38 347 A1 ist eine Führungsschiene für einen Seil- oder Bowdenrohr-Fensterheber bekannt, die einen Führungsbereich mit Gleitflächen zur Aufnahme von Gleitführungen eines verschiebbar auf der Führungsschiene gelagerten Mitnehmers und einen mit dem Führungsbereich verbundenen Versteifungsbereich mit Versteifungselementen aus Rippen und/oder Stegen auf weist, die integral und senkrecht an die Fläche des Versteifungsbereichs angeformt sind. Hierdurch wird die Voraussetzung dafür geschaffen, den Versteifungsbereich aus einem Kunststoff mit hoher mechanischer Festigkeit und den Führungsbereich aus einem Kunststoff mit guten tribologischen Eigenschaften zu fertigen, wobei beide Bereiche integral miteinander verbunden werden und somit eine konstruktive Einheit ergeben.

Aus der DE 101 44 779 A1 ist ein Mitnehmer eines bahngesteuerten Fensterhebers eines Kraftfahrzeugs bekannt, der mit einer Fensterscheibe des Kraftfahrzeugs verbunden und mittels eines Antriebsmechanismus zur Verstellung der Fensterscheibe antreibbar ist. An einem Strukturteil des Mitnehmers sind als Kunststoffgleiter ausgebildete Gleiter angespritzt, die auf Führungsbahnen einer aus einem Metallblech bestehenden Grundplatte gleitend angeordnet sind. Die Gleiter sind an dem Strukturteil des Mitnehmers drehbar gelagert und um eine senkrecht zu den Führungsbahnen ausgerichtete Achse schwenkbar gelagert.

Aus der WO 03/045736 A2 ist ein Türmodul für Kraftfahrzeuge bekannt, dass aus einer einteiligen Kunststoffplatte mit mehreren darauf montierten Funktionselementen der Kraftfahrzeugtür besteht. In die Kunststoffplatte sind paarweise vordere und hintere Auswölbungen integriert, an denen die Führungsschienen eines Fensterhebers befestigt werden. Die einteilige Grundplatte des bekannten Türmoduls bildet keine Führungsbahnen oder Führungsschienen aus, sondern nimmt die Führungsschienen an dafür vorgesehenen Befestigungs-Auswölbungen bzw. Abstandhaltern auf.

Die vorliegende Erfindung geht somit aus von einem bahngesteuerten Fensterheber eines Kraftfahrzeugs mit einem Mitnehmer, der mit einer Fensterscheibe des Kraftfahrzeugs verbunden und mittels eines Antriebsmechanismus zur Verstellung der Fensterscheibe antreibbar ist, und einer in dem Kraftfahrzeug befestigten, mehrteiligen Grundplatte, auf der mindestens zwei Führungsbahnen zur Führung des Mitnehmers und zur Verstellung des Mitnehmers entlang eines durch die Führungsbahnen gebildeten Verstellweges ausgebildet sind, wobei die Grundplatte aus einem Trägerteil und einem Versteifungsteil besteht, die nach Art eines Ober- und Unterzuges eines Doppel-T-Trägers mit Abstand zueinander angeordnet und fest miteinander verbunden sind.

Hiervon ausgehend liegt der vorliegenden Erfindung die Aufgabenstellung zugrunde, einen bahngesteuerten Fensterheber eines Kraftfahrzeugs bereit zu stellen, der bei minimalem Gewicht einer drei Führungsbahnen aufweisenden Grundplatte des Fensterhebers eine hohe Steifigkeit der Grundplatte zur Aufnahme von in X- und Y-Richtung des Kraftfahrzeugs auf die Führungsbahnen wirkenden Kräften ohne die Gefahr eines Verbiegens der Grundplatte oder Verklemmens eines in den drei Führungsbahnen geführten Mitnehmers gewährleistet.

Diese Aufgabe wird mit den Merkmalen des Anspruchs 1 gelöst.

Die Lösung stellt einen bahngesteuerten Fensterheber eines Kraftfahrzeugs bereit, der bei minimalem Gewicht eine dauerhaft einwandfreie Funktion auch bei Verstellbewegungen in X- und Y-Richtung des Kraftfahrzeugs gewährleistet. Dabei ist insbesondere das Verhältnis der Steifigkeit zum Gewicht des Fensterhebers optimal, so dass auch große, auf den bahngesteuerten Fensterheber einwirkende Kräfte, insbesondere in X- und Y-Richtung des Kraftfahrzeugs nicht zu einem Verbiegen der Grundplatte des Fensterhebers führen und damit eine optimale Führung der Fensterscheibe über deren gesamten Verstellweg gewährleistet ist.

Die Zusammensetzung der Grundplatte aus einem Trägerteil und einem Versteifungsteil, die mit Abstand zueinander angeordnet und nach Art eines Ober- und Unterzuges eines Doppel-T-Trägers fest miteinander verbunden sind, schafft die Voraussetzung dafür, dass aufgrund des hohen Flächenträgheitsmoments der Doppel-T-Träger-Konstruktion auch dünne und leichte Materialen eingesetzt werden können, die aber infolge der stabilen Brückenkonstruktion des Trägerteils und Versteifungsteils eine hohe Steifigkeit der Grundplatte gewährleisten. Darüber hinaus ist durch die Aufteilung der Grundplatte in ein Versteifungsteil und ein Trägerteil eine optimale Anordnung und Integration der Führungsbahnen in die geteilte Grundplatte ohne jegliche Abstützungen möglich und ein für jeden bahngesteuerten Fensterheber optimiertes Verhältnis zwischen Größe, Gewicht und Steifigkeit der Grundplatte einstellbar.

Während das Versteifungsteil in seinen Randbereichen zwei Führungsbahnen ausbildet, die Abstützungen für den Mitnehmer in Richtung der Fahrzeuglängsachse (X-Achse des Kraftfahrzeugs) und Fahrzeugquerachse (Y-Achse des Kraftfahrzeugs) aufweisen, in die Gleiter mit in X- und Y-Richtung des Kraftfahrzeugs ausgerichteten Gleitflächen zur Führung des Mitnehmers eingreifen, bildet das Trägerteil nur eine Führungsbahn in einem Randbereich aus, die eine Abstützung nur in Richtung der Fahrzeugquerachse (Y-Achse des Kraftfahrzeugs) aufweist, in die ein Gleiter mit einer nur in Y-Richtung führenden Gleitfläche eingreift.

Die Verteilung der Führungsbahnen auf das Trägerteil und das Versteifungsteil ermöglicht es, einen nahezu beliebigen Verlauf der Führungsbahnen in allen Ebenen und insbesondere auch in der Y-Z-Ebene und der X-Z-Ebene zu realisieren. Weiterhin können durch die Verteilung der Führungsbahnen auf das Trägerteil und das Versteifungsteil Haupt- und Nebenführungen ausgebildet werden, wobei die Hauptführung mit zwei Führungsbahnen aus Toleranzgründen auf dem Versteifungsteil angeordnet ist, das durch die höhere Belastung stärker ausgebildet werden kann als das Trägerteil, während die Nebenführung durch eine einzelne Führungsbahn realisiert wird, die als Umgriff auf dem Trägerteil angeordnet ist.

Entsprechend den unterschiedlichen Aufgabenstellungen der Haupt- und Nebenführung weisen die Führungsbahnen des Versteifungsteils Abstützungen für den Mitnehmer in X-und Y-Richtung des Kraftfahrzeugs auf, während die Führungsbahn des Trägerteils eine Abstützung nur in Y-Richtung des Kraftfahrzeugs ausbildet, wobei die Führungsbahnen des Versteifungsteils einen geringeren Abstand zueinander aufweisen als zur Führungsbahn des Trägerteils.

Die eng zueinander angeordneten Führungsbahnen der Hauptführung nehmen dabei die Hauptlast auf und schaffen dabei eine stabile Basis in Z-Richtung.

Dabei gewährleistet die Ausbildung der Führungsbahnen in den Randbereichen eine einfache, unterbrechungsfreie und damit die Festigkeitsstruktur des Versteifungsteils und des Trägerteils nicht durchbrechende Führung des Mitnehmers des bahngesteuerten Fensterhebers ohne Gefahr eines Verklemmens des Mitnehmers auch bei starken Richtungsänderungen des Verstellweges und Bewegungen insbesondere in X- und Y-Richtung des Kraftfahrzeugs.

Zur Minimierung des Gewichts des bahngesteuerten Fensterhebers unter Berücksichtigung der unterschiedlichen Belastungen und Materialien des Versteifungsteils und des Trägerteils ist die Breite des Versteifungsteils senkrecht zur Verstellrichtung des Mitnehmers kleiner als die Breite des Trägerteils.

Um eine minimale Bautiefe des bahngesteuerten Fensterhebers in Y-Richtung des Kraftfahrzeugs wegen der begrenzten Dicke insbesondere von Kraftfahrzeugtüren zu erzielen, ist das Versteifungsteil vorzugsweise in eine senkrecht zur Längserstreckung des Trägerteils verlaufende Abstufung des Trägerteils eingesetzt.

Die Einstellung und Einhaltung des Abstandes zwischen dem Versteifungsteil und dem Trägerteil zur Bildung eines Ober- und Unterzuges nach Art eines Doppel-T-Trägers bzw. einer Brückenkonstruktion erfolgt entweder über Ausprägungen und/oder Wölbungen des Trägerteils und/oder des Versteifungsteils oder durch ein zwischen dem Trägerteil und dem Versteifungsteil angeordnetes, separates Bauteil, beispielsweise in Form eines wellenförmigen Zwischenprofils, und/oder eine das Trägerteil und das Versteifungsteil verbindende Schaumeinlage, die das Trägerteil und das Versteifungsteil in stabiler Sandwichbauweise miteinander verbindet.

Die feste Verbindung zwischen dem Versteifungsteil und dem Trägerteil zur Erzielung einer hohen Steifigkeit nach Art eines Doppel-T-Trägers erfolgt durch eine kraft-, form-oder stoffschlüssige Verbindung zwischen dem Trägerteil und dem Versteifungsteil, insbesondere durch Schrauben, Nieten, Clinchen, Schweißen, Kleben oder dergleichen,

Zur Optimierung des Steifigkeits-Gewichtsverhältnisses der Grundplatte mit dem Ziel eines minimalen Gesamtgewichts des bahngesteuerten Fensterhebers unter Gewährleistung einer hohen Kraftaufnahme wird die Grundplatte aus einem Versteifungsteil und einem Trägerteil zusammengesetzt, deren Materialauswahl, Formgebung, Größe und Zusammensetzung den spezifischen Anforderungen eines bahngesteuerten Fensterhebers individuell angepasst werden können.

Dementsprechend können das Trägerteil und das Versteifungsteil entweder aus demselben oder einem gleichartigen Material oder alternativ aus unterschiedlichen Materialien bestehen.

Bei Verwendung desselben Materials für das Trägerteil und das Versteifungssteil weist das höher belastete Versteifungsteil eine größere Materialdicke als das Trägerteil auf.

Bei Verwendung gleichartiger Materialien wird die Festigkeit des Versteifungsteils größer als die des Trägerteils bemessen, insbesondere wird das Versteifungsteil aus hochfestem Stahl oder faserverstärktem Kunststoff und das Trägerteil aus niederfestem Stahl oder Kunststoff hergestellt.

Werden das Trägerteil und ein Versteifungsteil aus unterschiedlichen Materialien hergestellt, so wird
- das Versteifungsteil aus einem Metall mit hohem spezifischen Gewicht, insbesondere aus Stahl, und das Trägerteil aus einem Leichtmetall
- das Versteifungsteil aus einer Magnesium-Guss-Legierung, insbesondere mit räumlicher Struktur, und das Trägerteil aus einem Metallblech oder
- das Versteifungsteil aus Metall und das Trägerteil aus Kunststoff hergestellt.

Durch die Verbindung des Mitnehmers mit den Führungsbahnen über mehrere um die Y-Achse des Kraftfahrzeugs drehbare Gleiter , die um eine senkrecht zu den Führungsbahnen ausgerichtete und im Wesentlichen in der Ebene der Fensterscheibe liegende Achse schwenkbar gelagert sind, wird ein bahngesteuerter Fensterheber mit hohem Wirkungsgrad und optimierten Gleiteigenschaften des Mitnehmers entlang den Führungsbahnen bei optimaler Anpassung und Ausrichtung des Mitnehmers entsprechend dem Verlauf der Führungsbahnen geschaffen. Durch den Entfall von angefederten Klemmungen im Bereich der Gleitlager des Mitnehmers können sich die Gleiter in allen Freiheitsgraden bewegen, ohne zu verklemmen.

Zusätzlich gewährleistet dies eine minimale Bautiefe des bahngesteuerten Fensterhebers in Y-Richtung des Kraftfahrzeugs und damit einen äußerst kompakt aufgebauten, bahngesteuerten Fensterheber.

Durch den verbesserten Wirkungsgrad beim Verstellen des Mitnehmers entlang des Verstellweges des bahngesteuerten Fensterhebers können kleinere Antriebsmotoren für den Fensterheberantrieb eingesetzt werden, was wiederum eine geringere Belastung für die gesamte Struktur des bahngesteuerten Fensterhebers bedeutet und zu einer weiteren Gewichtsreduzierung des Fensterhebers beiträgt.

In einer bevorzugten Ausführungsform weist mindestens ein Gleiter ein Führungsstück mit die Führungsbahn aufnehmenden Gleitflächen und ein konisches Langloch auf, durch das ein Kugelbolzen greift, dessen eines Ende teilkugelförmig ausgebildet und in einer teilkugelförmigen Ausnehmung des Führungsstücks gelagert ist und dessen anderes Ende fest mit dem Mitnehmer verbunden ist, wobei zur Erzielung der Schwenkbarkeit des Gleiters zwischen dem Mitnehmer und dem Führungsstück eine um den Kugelbolzen drehbare Lagerpfanne angeordnet ist, deren am Führungsstück anliegende Seite eine zylinderabschnittsförmige. Kontaktfläche mit dem Führungsstück ausbildet.

In dieser Ausführungsform des Gleiters fahren die in die Führungsbahnen eingreifenden Führungsstücke entlang der Führungsbahnen und passen sich in ihrer Bewegung dem Verlauf der Führungsbahnen an. Dabei ist als erster Freiheitsgrad eine Verschiebung des Gleiters entlang der Führungsbahn, als zweiter Freiheitsgrad eine Drehung zwischen der Führungsbahn und dem Mitnehmer, was durch die feststehende Achse des Kugelbolzens erreicht wird, und als dritter Freiheitsgrad ein Schwenken des Gleiters um die jeweilige X-Achse zur Führungsbahn erforderlich, um Winkelfehler zum Mitnehmer auszugleichen. Diese Forderungen werden durch die quer zur Anbindung des Gleiters am Mitnehmer verlaufenden Gleitflächen, die Lagerung des fest mit dem Mitnehmer verbundenen Kugelbolzen in einer teilkugelförmigen Ausnehmung des Führungsstückes und Schwenkbarkeit des Kugelbolzens im konischen Langloch des Führungsstücks sowie durch die zylinderabschnittsförmige Kontaktfläche zwischen der Lagerpfanne und dem Führungsstück erfüllt.

Um Toleranzen auszugleichen und Geräusche zu vermeiden, kann zwischen der Lagerpfanne und dem Mitnehmer ein Federelement angeordnet werden, das als Tellerfeder, Spiralfeder oder als angeformte Feder mit Elastomeren ausgebildet werden kann.

Zur Optimierung der Gleiteigenschaften können in die Gleitflächen des Führungsstückes Gleiteinsätze mit im Bezug auf das Material der Führungsbahn optimierten Gleiteigenschaften eingesetzt werden, insbesondere dann, wenn die Gleiteigenschaften der im Führungsstück ausgebildeten Gleitflächen, beispielsweise bei Verwendung eines faserverstärkten Kunststoffs oder Leichtmetallgusses für das Führungsstück nicht ausreichen sollte.

Um den bahngesteuerten Fensterheber im oberen Schachtbereich der Karosseire, insbesondere der Türkarosserie in Y-Richtung des Kraftfahrzeugs möglichst schmal zu gestalten und damit eine hohe Kompaktheit des bahngesteuerten Fensterhebers in Y-Richtung zu erzielen, werden die Führungsstücke versetzt zur Führungsbahn angeordnet, indem das den Kugelbolzen aufnehmende konische Langloch des Führungsstücks versetzt zur Führungsbahn angeordnet wird. Dadurch wird auch eine bessere Einleitung von in Y-Richtung des Kraftfahrzeugs wirkenden Kräften erreicht, da es zu einer teilweisen Überdeckung des Kopfes des Lagerbolzens einerseits und der Führungsbahnen des Versteifungsteils bzw. des Trägerteils andererseits kommt.

Um ein Abkippen der Gleiter in Y-Richtung des Kraftfahrzeugs zu verhindern, ist das konische Langloch des Führungsstücks nur in eine Richtung verlaufend ausgebildet und die zylinderabschnittförmige Kontaktfläche zwischen dem Führungsstück und der Lagerpfanne lässt nur eine Schwenkrichtung zu.

Nachfolgend wird die Erfindung anhand von in den Figuren der Zeichnung dargestellten Ausführungsbeispielen näher erläutert. Dabei zeigen:
- Fig. 1: eine Vorderansicht eines Teils eines bahngesteuerten Fensterhebers mit einer entlang eines Verstellweges zu verstellenden Fensterscheibe;
- Fig. 2: eine vergrößerte Darstellung der Grundplatte des bahngesteuerten Fensterhebers mit einem entlang der Führungsbahnen verstellbaren Mitnehmer;
- Fig. 3: eine dreidimensionale Darstellung des Fensterhebers von dessen Oberseite aus betrachtet;
- Fig. 4: eine dreidimensionale Darstellung der Grundplatte von deren Unterseite aus betrachtet;
- Fig. 5: eine dreidimensionale Darstellung der Rückseite der Grundplatte;
- Fig. 6: eine schematische, dreidimensionale Darstellung der Grundplatte mit darauf angeordnetem Antriebsmechanismus eines bahngesteuerten Fensterhebers;
- Fig. 7: eine Seitenansicht der aus einem Versteifungsteil und einem Trägerteil zusammengesetzten Grundplatte;
- Fig. 8: einen Längsschnitt durch die Grundplatte gemäß Fig. 7;
- Fig. 9: einen horizontalen Querschnitt durch die Grundplatte gemäß den Fig. 7 und 8;
- Fig. 10: eine Seitenansicht einer Grundplatte mit einem separaten Zwischenteil zwischen dem Versteifungsteil und dem Trägerteil;
- Fig. 11: eine Seitenansicht einer Grundplatte mit einer Ausschäumung zwischen dem Versteifungsteil und dem Trägerteil;
- Fig. 12: eine perspektivische Darstellung eines Mitnehmers mit drei Gleitern;
- Fig. 13: eine vergrößerte perspektivische Darstellung eines als Umgriffgleiter ausgebildeten Gleiters;
- Fig. 14: eine perspektivische Darstellung eines den Randbereich im oberen Teil des Verstärkungsteils umgreifenden Gleiters für eine Kraftaufnahme in X- und Y-Richtung des Kraftfahrzeugs;
- Fig. 15: eine vergrößerte perspektivische Darstellung des Gleiters gemäß Fig.14;
- Fig. 16 und 17: verschiedene Teilschnitte durch den in den Fig. 14 und 15 dargestellten Gleiter;
- Fig. 18 und 19: perspektivische Darstellungen des in den Fig. 14 bis 17 dargestellten Gleiters zur Erläuterung der Schwenkbarkeit des Gleiters in nur einer Schwenkrichtung;
- Fig. 20: einen Längsschnitt durch einen um die Y-Achse des Kraftfahrzeugs drehbaren und um eine senkrecht zu den Führungsbahnen ausgerichtete und in der Ebene der Fensterscheibe liegenden Achse schwenkbaren Gleiter und
- Fig. 21: einen Längsschnitt durch den Gleiter gemäß Fig. 20 im verschwenkten Zustand.

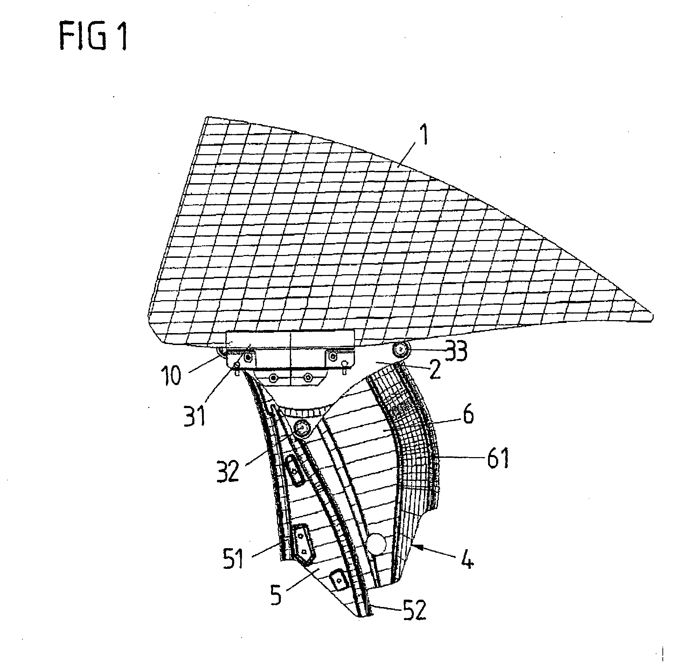

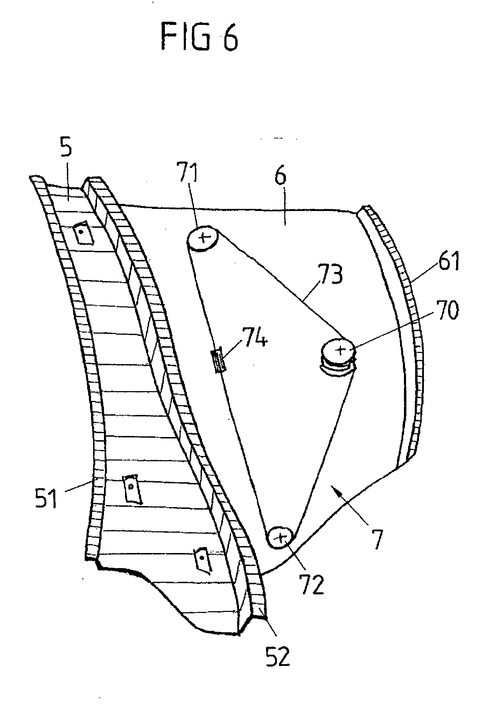

Fig. 1 zeigt die Vorderansicht eines Teils eines bahngesteuerten Fensterhebers eines Kraftfahrzeugs zum Verstellen einer Fensterscheibe 1 entlang eines vorgegebenen Verstellweges. Die Unterkante der Fensterscheibe 1 ist fest in einem Scheibenhalter 10 gelagert, der mit einer Hebeschiene bzw. einem Mitnehmer 2 verbunden ist. Der Mitnehmer 2 wird mittels eines in Fig. 6 dargestellten Antriebsmechanismus entlang des vorgegebenen Verstellweges bewegt, so dass die mit dem Mitnehmer 2 über den Scheibenhalter 10 verbundene Fensterscheibe 1 auf- und abwärts bewegt und in der Fensterscheibenebene sowie senkrecht hierzu verschwenkt wird. Zu diesem Zweck weist der Mitnehmer 2 drei Gleiter 31, 32, 33 auf, die formschlüssig in Führungsbahnen 51, 52, 61 einer in das Kraftfahrzeug, beispielsweise in eine Kraftfahrzeugtür, eingesetzten Grundplatte 4 eingreifen.

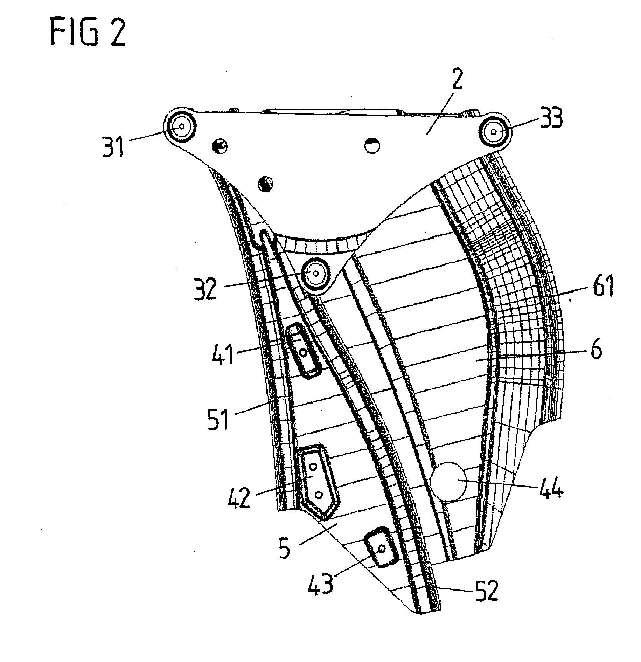

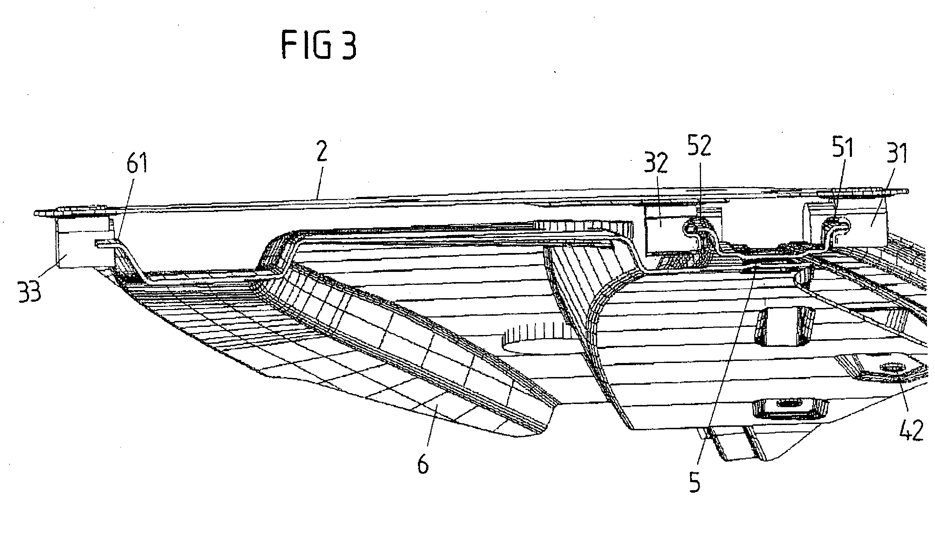

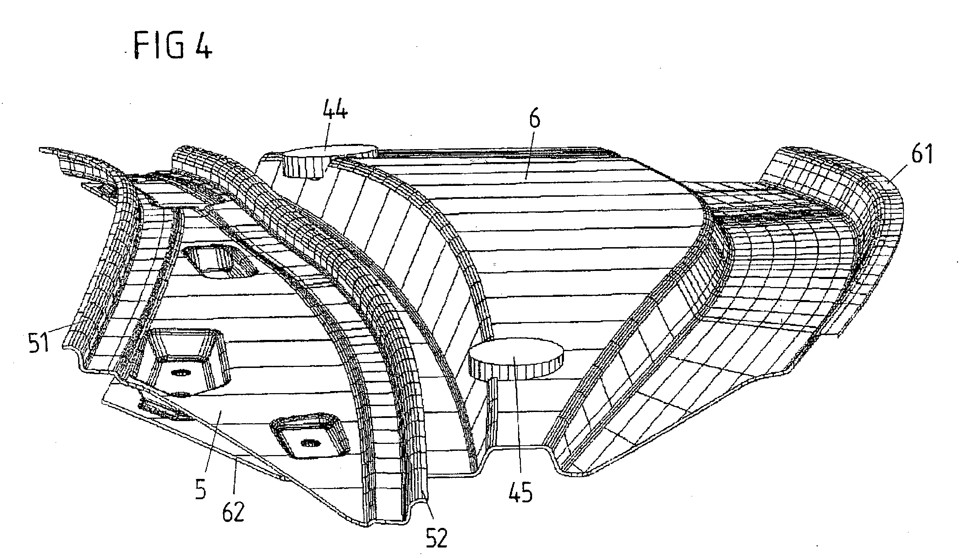

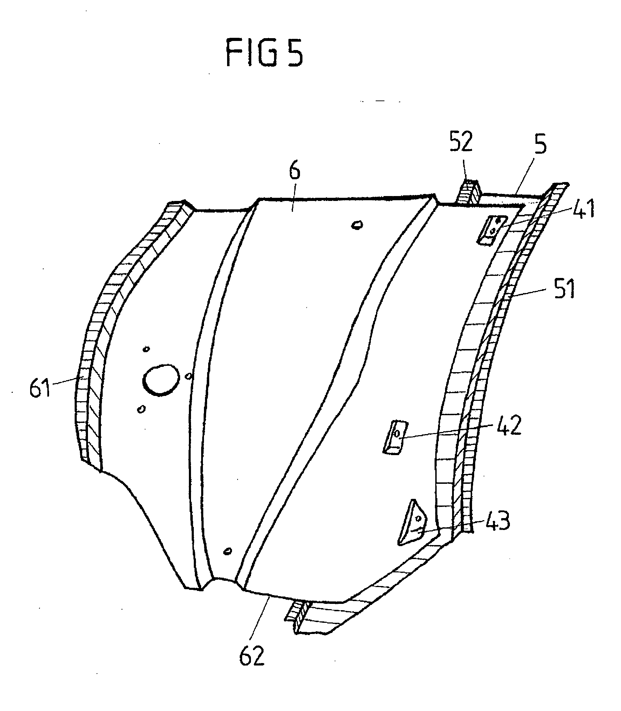

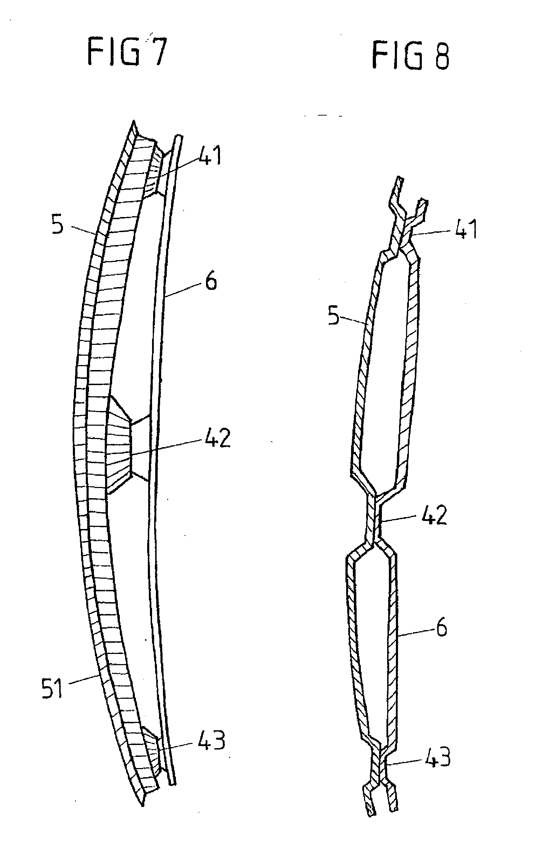

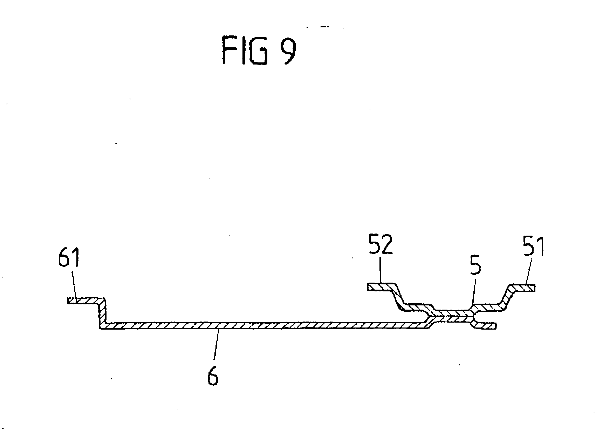

Die in Fig. 2 in vergrößertem Maßstab, in Fig. 3 in einer Oberseitenansicht, in Fig. 4 in einer Ansicht von schräg unten, in Fig. 5 von der Rückseite, in Fig. 7 in einer Seitenansicht, in Fig. 8 in einem Längsschnitt und in Fig. 9 in einem horizontalen Querschnitt dargestellte Grundplatte 4 besteht aus einem schmalen Versteifungsteil 5 und einem breiteren Trägerteil 6, die über Ausprägungen und/oder Wölbungen 41, 42, 43 miteinander verbunden sind und dadurch einen Ober- und Unterzug eines nach Art eines Doppel-T-Trägers ausgebildeten Bauteils ausbilden, so dass die Eigensteifigkeit der Grundplatte 4 in erheblichem Maße von dieser Brückenkonstruktion bestimmt wird. Die Ausprägungen und/oder Wölbungen 41, 42, 43 des Versteifungsteils 5 und Trägerteils 6 bestimmen deren gegenseitigen Abstand sowie die Zugbandstruktur der Verbindung beider Teile 5, 6 zur Gewährleistung einer hohen Eigensteifigkeit der aus beiden Teilen zusammengesetzten Grundplatte 4.

Zur Optimierung des Verhältnisses von Eigensteifigkeit zum Gewicht der Grundplatte 4 können entsprechend den jeweiligen Aufgabenstellungen und Funktionen des Versteifungsteils 5 und des Trägerteils 6 gleiche, gleichartige oder unterschiedliche Materialien für das Versteifungsteil 5 und des Trägerteil 6 eingesetzt werden.

Bei Verwendung desselben Materials für das Trägerteil und das Versteifungssteil weist das höher belastete Versteifungsteil eine größere Materialdicke als das Trägerteil auf.

Bei Verwendung gleichartiger Materialien wird die Festigkeit des Versteifungsteils größer als die des Trägerteils bemessen, insbesondere wird das Versteifungsteil aus hochfestem Stahl oder faserverstärktem Kunststoff und das Trägerteil aus niederfestem Stahl oder Kunststoff hergestellt.

Werden das Trägerteil und ein Versteifungsteil aus unterschiedlichen Materialien hergestellt, so wird
- das Versteifungsteil aus einem Metall mit hohem spezifischen Gewicht, insbesondere aus Stahl, und das Trägerteil aus einem Leichtmetall
- das Versteifungsteil aus einer Magnesium-Guss-Legierung, insbesondere mit räumlicher Struktur, und das Trägerteil aus einem Metallblech oder
- das Versteifungsteil aus Metall und das Trägerteil aus Kunststoff hergestellt.

Zur Erzielung einer geringen Bautiefe in Y-Richtung des Kraftfahrzeugs ist das Versteifungsteil 5 - wie insbesondere der perspektivischen Ansicht gemäß Fig. 4 zu entnehmen ist - in eine Abstufung 62 des in Y-Richtung des Kraftfahrzeugs profilierten Trägerteils 6 eingesetzt und ist wesentlich schmaler in Bezug auf den Verstellweg ausgebildet als das Trägerteil 6, so dass das im Allgemeinen höhere spezifische Gewicht des aus einem hochfesten Material hergestellten Versteifungsteils 5 gegenüber dem deutlich größeren, aber aus einem Material mit geringem Gewicht hergestellte Trägerteil 6 in geringerem Maße zum Gesamtgewicht der Grundplatte 4 beiträgt.

Die Verbindung zwischen dem Versteifungsteil 5 und dem Trägerteil 6 kann in beliebiger Weise über Form-, Kraft- oder Stoffschluss, beispielsweise unter Verwendung von Schrauben, Nieten, Clinchen, Schweißen, Kleben oder dergleichen erfolgen.

Die abgewinkelten Außenränder des Versteifungsteils 5 bilden die Führungsbahnen 51, 52 einer Hauptführung des bahngesteuerten Fensterhebers aus, während der der Verbindung des Trägerteils 6 mit dem Versteifungsteil 5 entgegen gesetzte Außenrand des Trägerteils 6 eine als Nebenführung dienende Führungsbahn 61 als Umgriffsführung ausbildet. Die die Hauptführung ausbildenden Führungsbahnen 51, 52, die mit den Gleitern 31, 32 des Mitnehmers 2 zusammenwirken, befinden sich aus Toleranzgründen auf demselben Bauteil der Grundplatte 4, nämlich dem Versteifungsteil 5, das durch die dadurch bedingten höheren Belastungen aus einem stärkeren Material gefertigt wird als das geringer belastete Trägerteil 6. Dabei sind die die Hauptführung bildenden Führungsbahnen 51, 52 so eng wie möglich zueinander angeordnet, um eine stabile Basis der Grundplatte 4 in Z-Richtung des Kraftfahrzeugs, d. h. in Richtung der Kraftfahrzeughochachse, zu erhalten.

Die Verbindung der aus dem Versteifungsteil 5 und dem Trägerteil 6 zusammengesetzten mehrteiligen Grundplatte 4 mit Teilen der Karosserie des Kraftfahrzeugs erfolgt über nur wenige Befestigungen, von denen in den Fig. 1 bis 4 die Befestigungen 44, 45 dargestellt sind.

Fig. 3 verdeutlicht in einer Ansicht von oben auf den Mitnehmer 2 und die Grundplatte 4 das Zusammenwirken der mit dem Mitnehmer 2 verbundenen Gleiter 31, 32, 33 mit den Führungsbahnen 51, 52 an den Außenrändern des Versteifungsteils 5 bzw. der Führungsbahn 61 an dem gegenüberliegenden Außenrand des Trägerteils 6. Durch den Entfall von bei bekannten bahngesteuerten Fensterhebern erforderlichen angefederten Klemmungen im Bereich der Gleitlflächen der Gleiter 31, 32, 33 werden die Gleiteigenschaften der Gleiter 31, 32, 33 auf den Führungsbahnen 51, 52, 61 und damit der Wirkungsgrad des bahngesteuerten Fensterhebers deutlich verbessert. Darüber hinaus können die Führungsbahnen 51, 52, 61 konstruktiv einfach, nämlich als einfache Abwinklungen der Außenränder des Versteifungsteils 5 bzw. des gegenüberliegenden Außenrandes des Steuerteils 6 gestaltet werden, ohne dass eine entsprechende komplizierte Geometrie vorgegeben werden muss. Vielmehr ist nur eine ausreichende Wandstärke für eine geprägte Schiene mit Z-Profil erforderlich.

Fig. 6 zeigt in einer schematischen, perspektivischen Vorderansicht die aus dem Versteifungsteil 5 und dem Trägerteil 6 nach Art eines Doppel-T-Trägers zusammengesetzte Grundplatte 4 des bahngesteuerten Fensterhebers mit einem auf dem Trägerteil 6 angeordneten Antriebsmechanismus 7. Der Antriebsmechanismus 7 besteht aus einer mit einem elektromotorischen oder manuellen Fensterheberantrieb verbundenen Seiltrommel 70, auf die ein Fensterheberseil 73 aufgewickelt ist, das um Umlenkungen 71, 72 geführt ist, die als Umlenkkufen oder Seilrollen ausgebildet sind, und das über in eine Nippelkammer 74 eingelegte Seilnippel mit dem Mitnehmer 2 verbunden ist.

Zur Verstellung des Mitnehmers 2 entlang des durch die Führungsbahnen 51, 52 an den Außenrändern des Versteifungsteils 5 bzw. der Führungsbahn 61 an dem der Verbindung des Versteifungsteils 5 mit dem Trägerteil 6 gegenüberliegenden Außenrand des Trägerteils 6 gebildeten Verstellweges wird das Fensterheberseil 73 durch den Fensterheberantrieb und die Seiltrommel 70 in der einen oder anderen Drehrichtung im Uhrzeigersinn oder entgegen des Uhrzeigersinns um die Umlenkungen 71, 72 angetrieben und dadurch der Mitnehmer 2 sowie die über den Scheibenhalter 10 mit dem Mitnehmer 2 verbundene Fensterscheibe 1 angehoben bzw. abgesenkt sowie entsprechend der geometrischen Zuordnung der Führungsbahnen 51, 52, 61 in der Fensterscheibenebene oder senkrecht dazu geschwenkt.

Durch die Anordnung der Führungsbahnen 51, 52, 61 an den Außenrändern des Versteifungsteils 5 und des Trägerteils 6 entfallen geschlitzte Führungsbahnen, die die Festigkeitsstruktur der Grundplatte 4 herabsetzen würden und mit Bügeln verstärkt werden müssten. Da die Führungsbahnen 51, 61 an den Außenkanten der Grundplatte 4 angeordnet sind, wird der Bauraum in Z-Richtung des Kraftfahrzeugs, d. h. in der Richtung der Hochachse des Kraftfahrzeugs und damit in Verstellrichtung der Fensterscheibe, gegenüber bekannten bahngesteuerten Fensterhebern deutlich besser ausgenutzt, da bei optimaler Abstützung des Mitnehmers 2 kein seitliches Restmaterial der Grundplatte 4 verbleiben muss, um geschlitzte oder aufgesetzte Führungsbahnen in oder auf der Grundplatte 4 anzuordnen.

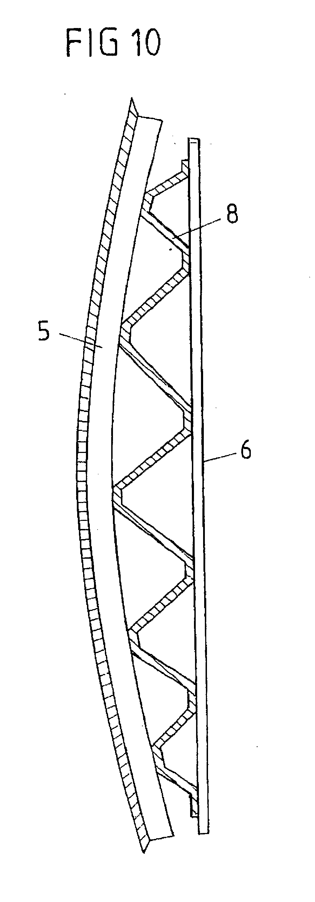

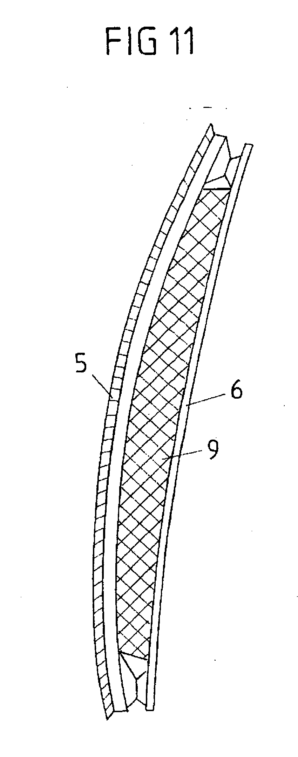

Anstelle von Ausprägungen und/oder Wölbungen eines strukturierten Versteifungsteils 5 und strukturierten Trägerteils 6 zur Einstellung des Abstandes zwischen dem Versteifungsteil 5 und dem Trägerteil 6 zur Ausbildung der die Eigensteifigkeit optimierenden Brückenkonstruktion der Grundplatte 4 kann insbesondere beim Einsatz nicht strukturierter Versteifungs- und Trägerteile 5, 6 ein separates Zwischenteil in Form eines wellenförmigen Zwischenprofils 8 gemäß Fig. 10 oder eine Ausschäumung 9 zwischen den endseitig über Ausprägungen und/oder Wölbungen miteinander verbundenen Verstärkungsteil 5 und Trägerteil 6 gemäß Fig. 11 vorgesehen werden, wobei letztere eine die Eigensteifigkeit der Grundplatte 4 erhöhende Sandwichbauweise ergibt.

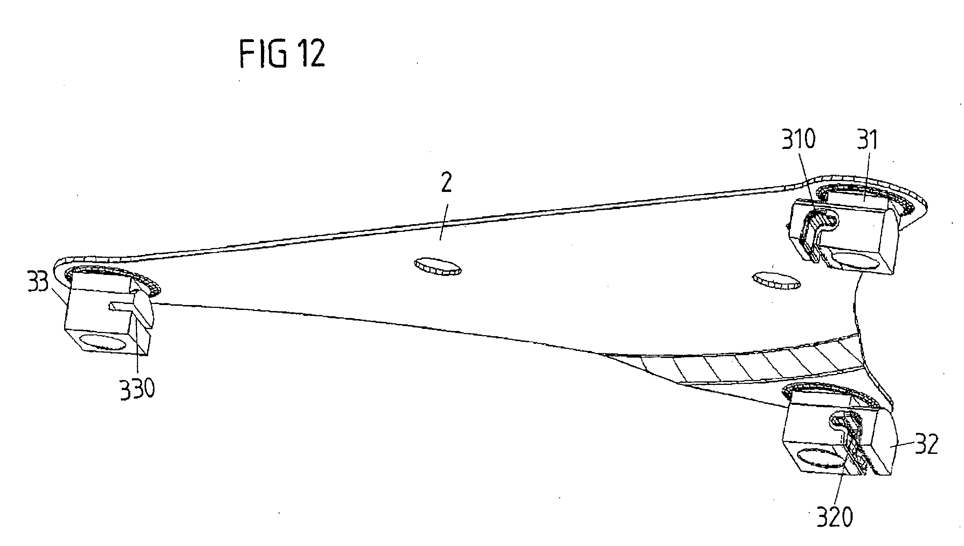

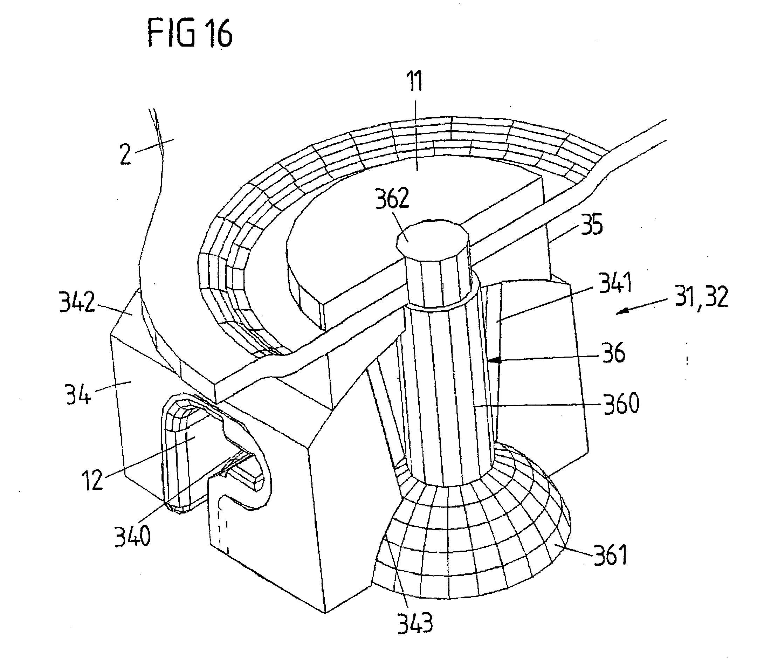

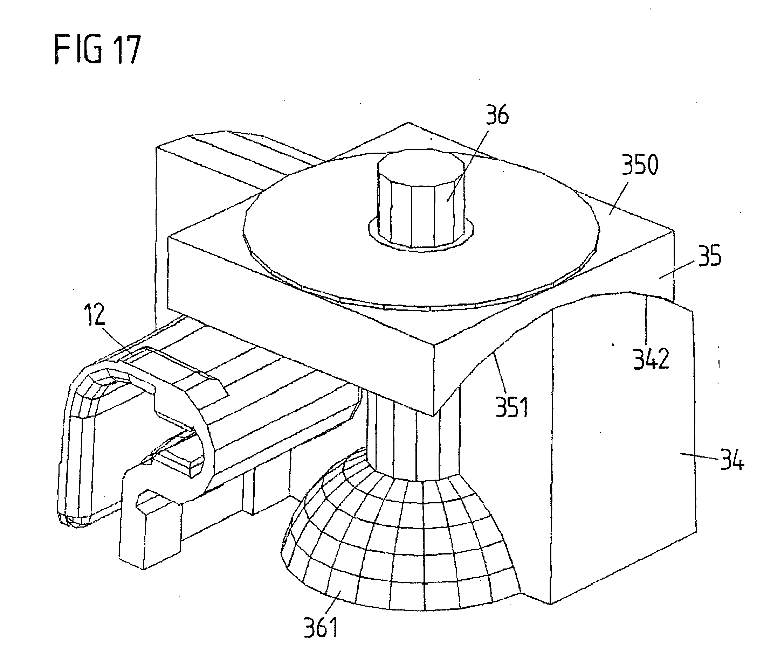

Fig. 12 zeigt in einer perspektivischen Ansicht den Mitnehmer 2 mit den drei mit den Führungsbahnen 51, 52, 61 der Grundplatte 4 zusammenwirkenden Gleitern 31, 32, 33. Der Aufbau der im Wesentlichen baugleichen Gleiter 31, 32, 33 wird nachstehend anhand der Fig. 16 bis 21 näher erläutert.

Die beiden mit den die Hauptführung bildenden Führungsbahnen 51, 52 am Außenrand des Versteifungsteils 5 zusammenwirkenden Gleiter 31, 32 weisen Gleitflächen 310, 320 auf, die eine Führung und damit Kraftaufnahme sowohl in X- als auch in Y-Richtung des Kraftfahrzeugs ermöglichen. Demgegenüber ist der dritte Gleiter 33 als Umgriffgleiter mit einer Gleitfläche 330 versehen, die keine Führung in X-Richtung des Kraftfahrzeugs bereitstellt, so dass der dritte Gleiter 33 nur Kräfte in Y-Richtung des Kraftfahrzeugs aufnimmt.

Durch die Verwendung eines einfachen Umgriffgleiters für das Nebenlager wird der Wirkungsgrad des bahngesteuerten Fensterhebers zusätzlich verbessert, da Verspannungen in X-Richtung des Kraftfahrzeugs ausgeschlossenwerden können. Um eine Verwendung gleicher Teile zu ermöglichen, kann aber für das Nebenlager an Stelle eines einfachen Umgriffgleiters auch ein Gleiter 33 entsprechend den Gleitern 31, 32 für eine Kraftaufnahme sowohl in X- als auch in Y-Richtung des Kraftfahrzeugs eingesetzt werden.

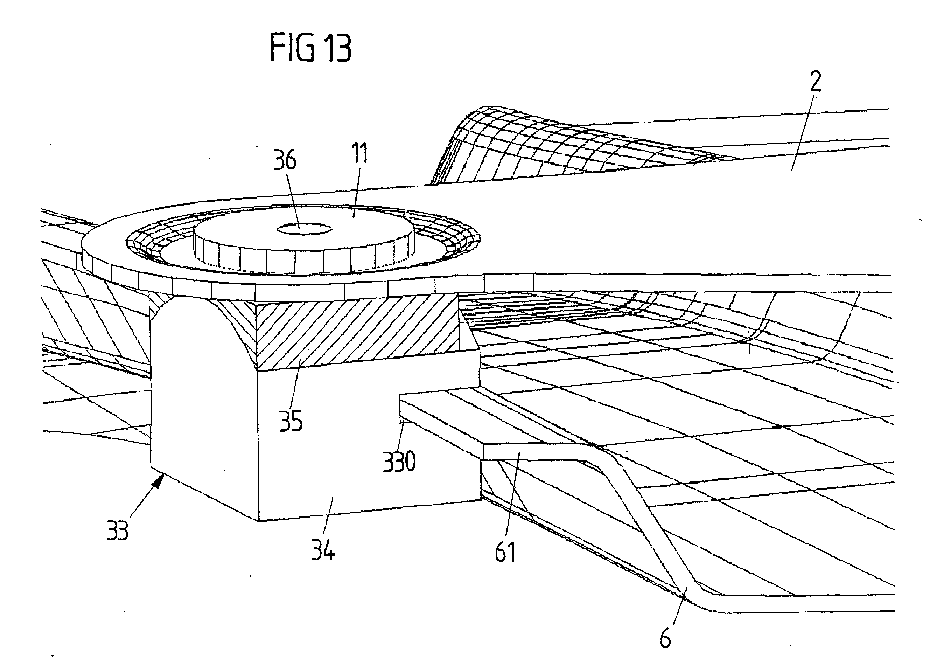

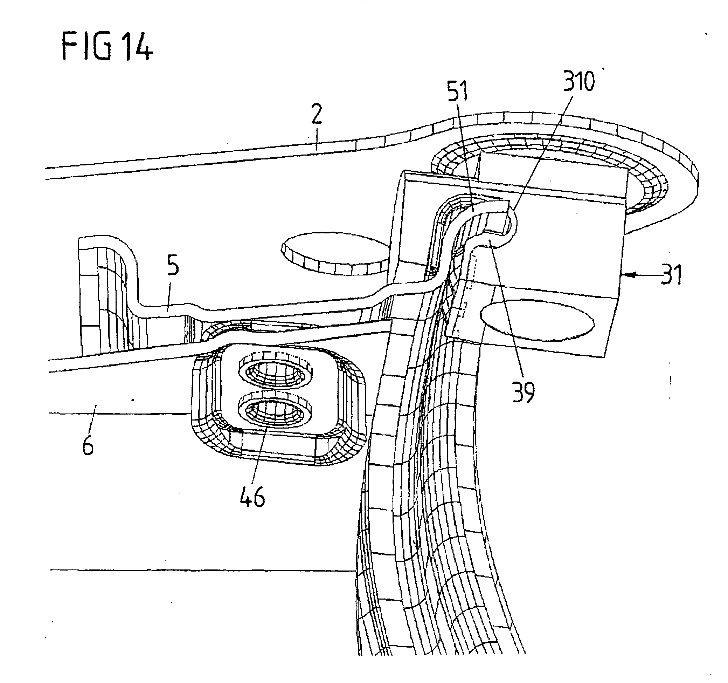

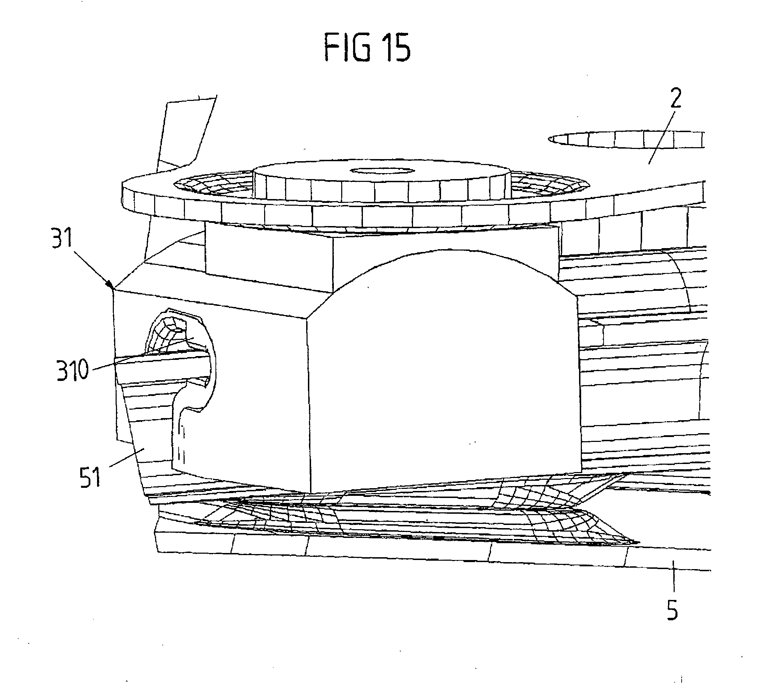

Fig. 13 zeigt den als Umgriffsgleiter ausgebildeten dritten Gleiter 33 in vergrößerter perspektivischer Ansicht, während in den Fig. 14 und 15 der mit seiner Gleitfläche 310 Kräfte in X- und Y-Richtung des Kraftfahrzeugs aufnehmende erste Gleiter 31 in vergrößerter perspektivischer Darstellung dargestellt ist. Der dritte Gleiter 33 umgreift die die Nebenführung bildende Führungsbahn 61 am Außenrand des Trägerteils 6 mit seiner ausschließlich Kräfte in Y-Richtung aufnehmenden Gleitfläche 330.

Fig. 14 verdeutlicht in einer perspektivischen Darstellung des oberen Bereichs des bahngesteuerten Fensterhebers den Umgriff der Führungsbahn 51 am Außenrand des Versteifungsteils 5 durch die Gleitfläche 310 des ersten Gleiters 31 sowie die Verbindung des Versteifungsteils 5 mit dem Trägerteil 6 über die Verbindungsstelle 46.

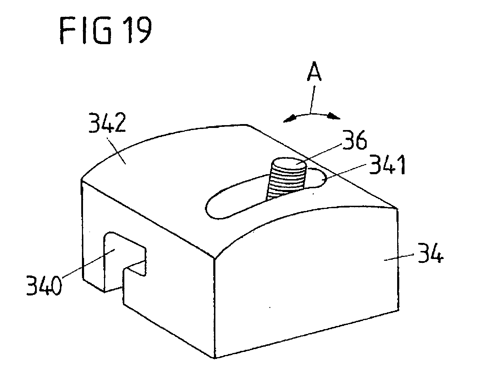

Zur Erzielung eines optimalen Wirkungsgrades sind die Gleiter 31, 32, 33 so beschaffen, dass sie sich in allen Freiheitsgraden bewegen können, ohne beim Verstellen des Mitnehmers 2 entlang des Verstellweges des bahngesteuerten Fensterhebers zu verklemmen. Zu diesem Zweck weisen die Gleiter gemäß den Fig. 16 bis 21 ein Führungsstück 34 auf, in dem die Gleitfläche 340 zur Aufnahme einer der Führungsbahnen 51, 52, 61 eingeformt ist, die in den Fig. 16 bis 19 als Gleitfläche zur Aufnahme von Kräften in X- und Y-Richtung ausgebildet ist. In die Gleitfläche 340 kann gemäß Fig. 19 ein Gleiteinsatz 12 eingesetzt werden, insbesondere wenn das für das Führungsstück 34 verwendete Material keine optimalen Gleiteigenschaften aufweist. Das Führungsstück 34 enthält ein konisches Langloch 341 sowie an seinem dem Mitnehmer 2 entfernten Ende eine teilkugelförmige Ausnehmung 343, die an das schmale Ende des konischen Langlochs 341 anschließt sowie eine als Zylinderabschnitt ausgebildete, dem Mitnehmer 2 zugewandte Oberfläche 342. In das konische Langloch 341 des Führungsstücks 34 ist der Zylinderkörper 360 eines Kugelbolzens 36 gesteckt, dessen Kopf 361 teilkugelförmig ausgebildet ist und in der teilkugelförmigen Ausnehmung 343 des Führungsstücks 34 lagert. Der entgegen gesetzte Fuß 362 des Kugelbolzens 36 ist zylinderförmig ausgebildet und weist ein Gewinde auf, das unmittelbar mit dem Mitnehmer 2 oder mit einer Versteifungsscheibe 11 mit Innengewinde verschraubt und damit fest mit dem Mitnehmer 2 verbunden ist.

Zwischen der dem Führungsstück 34 zugewandten Fläche des Mitnehmers 2 und der zylinderabschnittförmigen Oberfläche 342 des Führungsstücks 34 ist eine um den Kugelbolzen 36 drehbare Lagerpfanne 35 angeordnet, deren dem Mitnehmer 2 zugewandte Oberfläche 350 am Mitnehmer 2 anliegt, während die gegenüberliegende Seite eine konkave, zylinderabschnittförmige Fläche 351 ausbildet, die zusammen mit der konvex geformten zylinderabschnittförmigen Fläche 342 des Führungsstücks 34 eine zylinderabschnitfiförmige Kontaktfläche ausbildet.

Die Ausbildung des konischen Langlochs 341 im Führungsstück 34 in Verbindung mit dem teilkugelförmigen Kopf 361 des Kugelbolzens 36 in der teilkugelförmigen Ausnehmung 343 im Führungsstück 34 sowie die zylinderabschnittsförmige Kontaktfläche zwischen dem Führungsstück 34 und der Lagerpfanne 35 und die Anordnung der Gleitfläche 340 im Führungsstück 34 senkrecht zum Kugelbolzen 36 ermöglicht folgende Freiheitsgrade:
1. Verschiebung des Gleiters 31, 32, 33 entlang der ihm zugeordneten Führungsbahn 51,52,61,
2. Drehung des Gleiters 31, 32, 33 und damit des Mitnehmers 2 gegenüber der zugeordneten Führungsbahn 51, 52, 61 der feststehenden Achse des Kugelbolzens 36 und
3. Schwenken des Gleiters 31, 32, 33 um die jeweilige X-Achse durch die zylinderabschnittsförmige Kontaktfläche zwischen dem Führungsstück 34 und der Lagerpfanne 35 zum Ausgleich von Winkelfehlern der Führungsbahn zum Mitnehmer bzw. dem der Führungsbahn zugeordneten Gleiter.

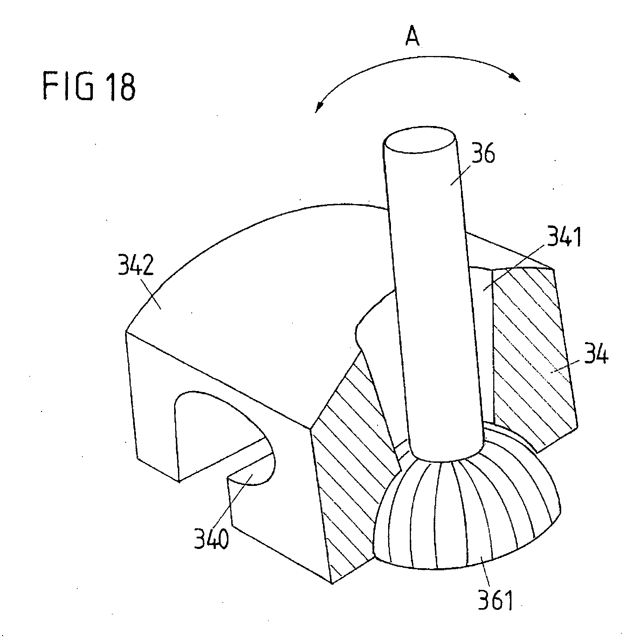

Dabei kann der fest mit dem Mitnehmer 2 verbundene Kugelbolzen 36 in dem konischen Langloch 341 und der teilkugelförmigen Ausnehmung 343 des Führungsstücks 34 in Richtung des in die Fig. 18 und 19 eingetragene Doppelpfeils A verschwenken.

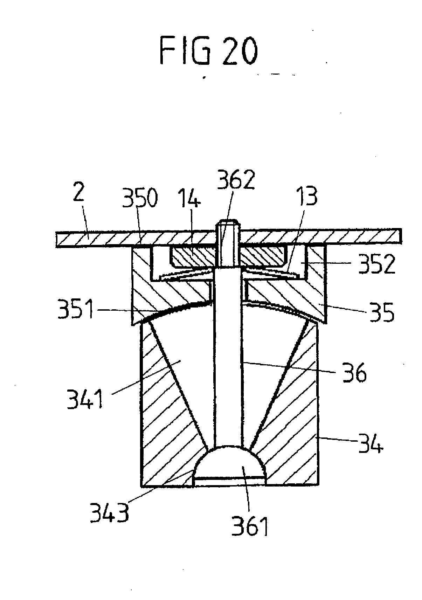

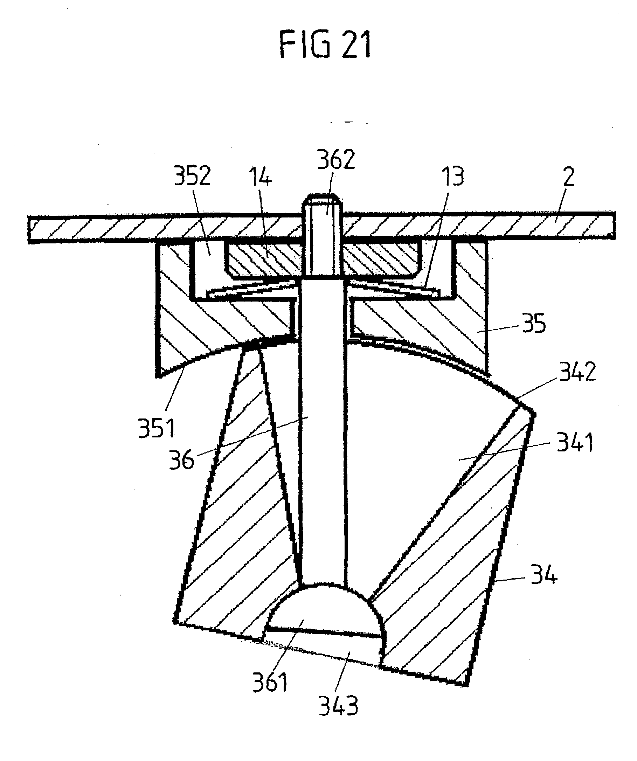

In den Fig. 20 und 21 wird in einem Längsschnitt durch den Gleiter verdeutlicht, wie die Schwenkbewegung zur Erlangung der vorstehend genannten Freiheitsgrade erfolgt.

Um Toleranz- oder Geräuschproblemen zu begegnen, ist in eine Ausnehmung 352 der Lagerpfanne 35, die in der dem Mitnehmer 2 zugewandten Seite der Lagerpfanne 35 angeordnet ist, ein Federelement 13 in Form einer Tellerfeder angeordnet. Zwischen der Tellerfeder 13 und der dem Gleiter zugewandten Seite des Mitnehmers 2 ist eine Scheibe 14 angeordnet.

Wie den Fig. 12 bis 17 zu entnehmen ist, sind die Führungsstücke 34 der Gleiter 31, 32, 33 versetzt zur jeweiligen Führungsbahn 51, 52, 61 positioniert, woraus ein Hebelarm zwischen dem Kugelbolzen 36 und der jeweiligen Führungsbahn resultiert. Die zur Führungsbahn 51, 52, 61 versetzte Lagerung der Führungsstücke 34 ermöglicht eine hohe Kompaktheit in Y-Richtung des Kraftfahrzeugs, da es aus Platzgründen häufig erforderlich ist, den gesamten bahngesteuerten Fensterheber im oberen Bereich in Y-Richtung des Kraftfahrzeugs möglichst schmal zu gestalten.

Durch diese Konstruktion wird zudem eine bessere Einleitung von in Y-Richtung auf den Mitnehmer 2 und damit auf die Gleiter 31, 32, 33 wirkenden Kräften erreicht, da es zu einer teilweisen Überdeckung des Kopfes des Lagerbolzens 36 einerseits und des Führungsbereiches des Versteifungsteils 5 und des Trägerteils 6 andererseits kommt. Um ein Abkippen des Kugelbolzens 36 in Y-Richtung zu verhindern, ist das konische Langloch 341 im Führungsstück 34 nur in einer Richtung ausgebildet und die zylinderabschnittsförmige Kontaktfläche zwischen der Lagerpfanne 35 und dem Führungsstück 34 entsprechend ausgerichtet, so dass nur eine Schwenkrichtung der Gleiter 31, 32, 33 zugelassen wird.

### Bezugszeichenliste

- 1: Fensterscheibe
- 2: Mitnehmer
- 4: Grund- oder Grundplatte
- 5: Versteifungsteil
- 6: Trägerteil
- 7: Antriebsmechanismus
- 8: wellenförmiges Zwischenprofil
- 9: Ausschäumung
- 10: Scheibenhalter
- 11: Versteifungsscheibe
- 12: Gleiteinsatz
- 13: Federelement
- 14: Scheibe
- 31, 32: Gleiter
- 33: Umgriffgleiter
- 34: Führungsstück
- 35: Lagerpfanne
- 36: Kugelbolzen
- 41, 42, 43: Ausprägungen oder Wölbungen
- 44, 45: Befestigungen
- 46: Verbindungsstelle
- 51, 52: Führungsbahnen einer Hauptführung
- 61: Führungsbahn einer Nebenführung
- 62: Abstufung des Trägerteils
- 70: Seiltrommel
- 71, 72: Seilumlenkungen
- 73: Fensterheberseil
- 74: Seilnippel (Nippelkammer)
- 310, 320: Gleitflächen
- 330: Gleitfläche des Umgriffgleiters
- 340: Gleitfläche
- 341: konisches Langloch
- 342: zylinderabschnittförmige Fläche
- 343: teilkugelförmigen Ausnehmung
- 350: Oberfläche
- 351: zylinderabschnittförmige Fläche
- 360: Zylinderkörper
- 361: Kopf
- 362: Fuß

## Patentansprüche

1. Bahngesteuerter Fensterheber eines Kraftfahrzeugs mit einem Mitnehmer (2), der mit einer Fensterscheibe (1) des Kraftfahrzeugs verbunden und mittels eines Antriebsmechanismus (7) zur Verstellung der Fensterscheibe (1) antreibbar ist, und einer in dem Kraftfahrzeug befestigten, aus einem Trägerteil (6) und einem Versteifungsteil (5) zusammengesetzten zweiteiligen Grundplatte (4), auf der Führungsbahnen (51, 52; 61) zur Führung des Mitnehmers (2) und zur Verstellung des Mitnehmers (2) entlang eines durch die Führungsbahnen (51, 52; 61) gebildeten Verstellweges ausgebildet sind, wobei das Trägerteil (6) und das Versteifungsteil (5) mit Abstand zueinander angeordnet und in einem oder mehreren umgrenzten Bereichen (41, 42, 43) miteinander verbunden sind,
**dadurch gekennzeichnet,**
**dass** das Versteifungsteil (5) in seinen Randbereichen zwei Führungsbahnen (51, 52) ausbildet, die Abstützungen für den Mitnehmer (2) in Richtung der Fahrzeuglängsachse (X-Achse des Kraftfahrzeugs) und Fahrzeugquerachse (Y-Achse des Kraftfahrzeugs) aufweisen, in die Gleiter (31, 32) mit in X- und Y-Richtung des Kraftfahrzeugs ausgerichteten Gleitflächen (310, 320) zur Führung des Mitnehmers (2) eingreifen, und das Trägerteil (6) in einem Randbereich eine Führungsbahn (61) ausbildet, die eine Abstützung nur in Richtung der Fahrzeugquerachse (Y-Achse des Kraftfahrzeugs) aufweist, in die ein Gleiter (33) mit einer nur in Y-Richtung führenden Gleitfläche (330) eingreift.

2. Fensterheber nach Anspruch 1, **dadurch gekennzeichnet, dass** die Breite des Versteifungsteils (5) senkrecht zur Verstellrichtung des Mitnehmers (2) kleiner ist als die Breite des Trägerteils (6) und im Wesentlichen vom Trägerteil (6) überdeckt ist.

3. Fensterheber nach Anspruch 1 oder 2, **dadurch gekennzeichnet, dass** das Versteifungsteil (5) in eine senkrecht zur Längserstreckung des Trägerteils (6) verlaufende Abstufung (62) des Trägerteils (6) eingesetzt ist.

4. Fensterheber nach mindestens einem der vorangehenden Ansprüche, **dadurch gekennzeichnet, dass** eine Führungsbahn (51) des Versteifungsteils (5) von der Überdeckung des Trägerteils (6) übersteht und dass das Trägerteil (6) in seinem der überstehenden Führungsbahn (51) gegenüberliegenden Randbereich die Führungsbahn (61) ausbildet.

5. Fensterheber nach mindestens einem der vorangehenden Ansprüche, **dadurch gekennzeichnet, dass** die Führungsbahnen (51, 52) des Versteifungsteils (5) einen geringeren Abstand zueinander aufweisen als zur Führungsbahn (61) des Trägerteils (6).

6. Fensterheber nach mindestens einem der vorangehenden Ansprüche, **dadurch gekennzeichnet, dass** der Abstand zwischen dem Trägerteil (6) und dem Versteifungsteil (5) über Ausprägungen und/oder Wölbungen (41, 42, 43) des Trägerteils (6) und/oder Versteifungsteils (5) eingestellt ist.

7. Fensterheber nach mindestens einem der vorangehenden Ansprüche, **dadurch gekennzeichnet, dass** der Abstand zwischen dem Trägerteil (6) und dem Versteifungsteil (5) durch ein zwischen dem Trägerteil (6) und dem Versteifungsteil (5) angeordnetes, separates Bauteil (8) und/oder eine das Trägerteil (6) und das Versteifungsteil (5) verbindende Schaumlage (9) eingestellt ist.

8. Fensterheber nach mindestens einem der vorangehenden Ansprüche, **dadurch gekennzeichnet, dass** das Trägerteil (6) und das Versteifungsteil (5) aus demselben oder einem gleichartigen Material bestehen, dass bei Verwendung desselben Materials für das Trägerteil (6) und das Versteifungssteil (5) das Versteifungsteil (5) eine größere Materialdicke als das Trägerteil (6) aufweist und dass bei Verwendung gleichartiger Materialien die Festigkeit des Versteifungsteils (5) größer als die des Trägerteils (6) ist, insbesondere das Versteifungsteil (5) aus hochfestem Stahl oder faserverstärktem Kunststoff und das Trägerteil (6) aus niederfestem Stahl oder Kunststoff besteht.

9. Fensterheber nach mindestens einem der vorangehenden Ansprüche 1 bis 5, **dadurch gekennzeichnet, dass** das Trägerteil (5) und das Versteifungsteil (6) aus unterschiedlichen Materialien bestehen, wobei insbesondere das Versteifungsteil (6) aus einem Metall mit hohem spezifischen Gewicht, insbesondere aus Stahl, und das Trägerteil (5) aus einem Leichtmetall besteht.

10. Fensterheber nach Anspruch 9, **dadurch gekennzeichnet, dass** das Versteifungsteil (6) aus einer Magnesium-Guss-Legierung, insbesondere mit räumlicher Struktur, und das Trägerteil (5) aus einem Metallblech hergestellt ist oder dass das Versteifungsteil (6) aus Metall und das Trägerteil (5) aus Kunststoff besteht.

11. Fensterheber nach mindestens einem der vorangehenden Ansprüche, **dadurch gekennzeichnet, dass** die Gleiter (31, 32, 33) um die Y-Achse des Kraftfahrzeugs drehbar und um eine senkrecht zu den Führungsbahnen (51, 52, 61) ausgerichtete und im Wesentlichen in der Ebene der Fensterscheibe (1) liegende Achse schwenkbar gelagert sind.

12. Fensterheber nach Anspruch 11, **dadurch gekennzeichnet, dass** mindestens ein Gleiter (31, 32, 33) ein Führungsstück (34) mit die Führungsbahn (51, 52, 61) aufnehmenden Gleitflächen (310, 320, 330; 340) und ein konisches Langloch (341) aufweist, durch das ein Kugelbolzen (36) greift, dessen Kopf (361) teilkugelförmig ausgebildet und in einer teilkugelförmigen Ausnehmung (343) des Führungsstücks (34) gelagert ist und dessen Fuß (362) fest mit dem Mitnehmer (2) verbunden ist.

13. Fensterheber nach Anspruch 12, **dadurch gekennzeichnet, dass** zwischen dem Mitnehmer (2) und dem Führungsstück (34) eine um den Kugelbolzen (36) drehbare Lagerpfanne (35) angeordnet ist, deren am Führungsstück (34) anliegende Seite eine zylinderabschnittsförmige Kontaktfläche (342, 351) mit dem Führungsstück ausbildet, dass zwischen der Lagerpfanne (35) und dem Mitnehmer (2) ein Federelement (13) angeordnet ist, dass das den Kugelbolzen (36) aufnehmende konische Langloch (341) des Führungsstücks (34) versetzt zur Führungsbahn (51, 52, 61) angeordnet und nur in eine Richtung verlaufend ausgebildet ist und dass das konische Langloch (341) des Führungsstücks (34) und die zylinderabschnittförmige Kontaktfläche (342, 351) zwischen dem Führungsstück (34) und der Lagerpfanne (35) nur eine Schwenkrichtung zulässt.

## Claims

1. A path-controlled window lifter of a motor vehicle with a driver (2) which is connected with a window pane (1) of the motor vehicle and can be driven by means of a drive mechanism (7) for adjusting the window pane (1), and with a two-part base plate (4) mounted in the motor vehicle and composed of a carrier part (6) and a reinforcement part (5), on which guide paths (51, 52; 61) are formed for guiding the driver (2) and for adjusting the driver (2) along an adjustment path formed by the guide paths (51, 52; 61), wherein the carrier part (6) and the reinforcement part (5) are arranged with a distance to each other and are connected with each other in one or more defined regions (41, 42, 43),
**characterized in**
**that** the reinforcement part (5) forms two guide paths (51, 52) in its edge regions, which include supports for the driver (2) in direction of the longitudinal vehicle axis (X-axis of the motor vehicle) and transverse vehicle axis (Y-axis of the motor vehicle), into which sliders (31, 32) with sliding surfaces (310, 320) oriented in X-and Y-direction of the motor vehicle engage for guiding the driver (2), and the carrier part (6) forms a guide path (61) in an edge region, which includes a support only in direction of the transverse vehicle axis (Y-axis of the motor vehicle), into which a slider (33) with a sliding surface (330) directed only in Y-direction engages.

2. The window lifter according to claim 1, **characterized in that** the width of the reinforcement part (5) vertical to the adjustment direction of the driver (2) is smaller than the width of the carrier part (6) and substantially is covered by the carrier part (6).

3. The window lifter according to claim 1 or 2, **characterized in that** the reinforcement part (5) is inserted into a stepped portion (62) of the carrier part (6) extending vertical to the longitudinal extension of the carrier part (6).

4. The window lifter according to at least one of the preceding claims, **characterized in that** a guide path (51) of the reinforcement part (5) protrudes from the overlap of the carrier part (6) and that the carrier part (6) forms the guide path (61) in its edge region opposite the protruding guide path (51).

5. The window lifter according to at least one of the preceding claims, **characterized in that** the guide paths (51, 52) of the reinforcement part (5) have a smaller distance to each other than to the guide path (61) of the carrier part (6).

6. The window lifter according to at least one of the preceding claims, **characterized in that** the distance between the carrier part (6) and the reinforcement part (5) is adjusted via formations and/or bulges (41, 42, 43) of the carrier part (6) and/or reinforcement part (5).

7. The window lifter according to at least one of the preceding claims, **characterized in that** the distance between the carrier part (6) and the reinforcement part (5) is adjusted by a separate component (8) arranged between the carrier part (6) and the reinforcement part (5) and/or by a foam layer (9) connecting the carrier part (6) and the reinforcement part (5).

8. The window lifter according to at least one of the preceding claims, **characterized in that** the carrier part (6) and the reinforcement part (5) are made of the same or a similar material, that when using the same material for the carrier part (6) and the reinforcement part (5), the reinforcement part (5) has a greater material thickness than the carrier part (6), and that when using similar materials, the strength of the reinforcement part (5) is greater than that of the carrier part (6), in particular the reinforcement part (5) is made of high-strength steel or fiber-reinforced plastics and the carrier part (6) is made of low-strength steel or plastics.

9. The window lifter according to at least one of the preceding claims 1 to 5, **characterized in that** the carrier part (5) and the reinforcement part (6) are made of different materials, wherein in particular the reinforcement part (6) is made of a metal with high specific weight, in particular of steel, and the carrier part (5) is made of a light metal.

10. The window lifter according to claim 9, **characterized in that** the reinforcement part (6) is made of a cast magnesium alloy, in particular with spatial structure, and the carrier part (5) is made of a metal sheet or that the reinforcement part (6) is made of metal and the carrier part (5) is made of plastics.

11. The window lifter according to at least one of the preceding claims, **characterized in that** the sliders (31, 32, 33) are mounted to be rotatable about the Y-axis of the motor vehicle and pivotable about an axis oriented vertical to the guide paths (51, 52, 61) and substantially located in the plane of the window pane (1).

12. The window lifter according to claim 11, **characterized in that** at least one slider (31, 32, 33) includes a guide piece (34) with sliding surfaces (310, 320, 330; 340) accommodating the guide path (51, 52, 61) and a conical oblong hole (341) through which a ball pin (36) extends, whose head (361) is formed partly spherical and is mounted in a partly spherical recess (343) of the guide piece (34) and whose foot (362) is firmly connected with the driver (2).

13. The window lifter according to claim 12, **characterized in that** between the driver (2) and the guide piece (34) a bearing cup (35) rotatable about the ball pin (36) is arranged, whose side resting against the guide piece (34) forms a cylindrical-portion-shaped contact surface (342, 351) with the guide piece, that between the bearing cup (35) and the driver (2) a spring element (13) is arranged, that the conical oblong hole (341) of the guide piece (34) accommodating the ball pin (36) is arranged offset with respect to the guide path (51, 52, 61) and is formed to extend in only one direction, and that the conical oblong hole (341) of the guide piece (34) and the cylindrical-portion-shaped contact surface (342, 351) between the guide piece (34) and the bearing cup (35) permits only one swivel direction.

## Revendications

1. Lève-vitre à trajectoire commandée pour un véhicule automobile, comportant un entraîneur (2) qui est relié à une vitre (1) du véhicule automobile et qui est actionnable au moyen d'un mécanisme d'entraînement (7) en vue du déplacement de la vitre (1), et une plaque de base (4) en deux parties, qui est fixée dans le véhicule automobile et est constituée par une partie de support (6) et une partie de renfort (5) et sur laquelle sont réalisées des voies de guidage (51, 52 ; 61) pour le guidage de l'entraîneur (2) et pour le déplacement de l'entraîneur (2) le long d'une trajectoire de déplacement formée par les voies de guidage (51, 52 ; 61), la partie de support (6) et la partie de renfort (5) étant disposées à distance l'une de l'autre et étant reliées entre elles dans une ou plusieurs zones (41, 42, 43) délimitées,
**caractérisé en ce que**
la partie de renfort (5) forme dans ses zones de bordure deux voies de guidage (51, 52), qui comportent des supports pour l'entraîneur (2) dans la direction de l'axe longitudinal du véhicule (axe X du véhicule automobile) et dans la direction de l'axe transversal du véhicule (axe Y du véhicule automobile), dans lesquels s'engagent, en vue du guidage de l'entraîneur (2), des patins (31, 32) avec des surfaces de glissement (310, 320) orientées dans les directions X et Y du véhicule automobile, et la partie de support (6) forme dans une zone de bordure une voie de guidage (61) qui comporte un support uniquement dans la direction de l'axe transversal du véhicule (axe Y du véhicule automobile), dans lequel s'engage un patin (33) avec une surface de glissement (330) guidant uniquement dans la direction Y.

2. Lève-vitre selon la revendication 1, **caractérisé en ce que** la largeur de la partie de renfort (5), perpendiculairement au sens de déplacement de l'entraîneur (2), est inférieure à la largeur de la partie de support (6) et est sensiblement recouverte par la partie de support (6).

3. Lève-vitre selon la revendication 1 ou 2, **caractérisé en ce que** la partie de renfort (5) est insérée dans un décrochement (62) de la partie de support (6), lequel s'étend perpendiculairement à la dimension longitudinale de la partie de support (6).

4. Lève-vitre selon au moins une des revendications précédentes, **caractérisé en ce qu'**une voie de guidage (51) de la partie de renfort (5) est en saillie au-delà du recouvrement de la partie de support (6), et **en ce que** la partie de support (6) forme la voie de guidage (61) dans sa zone de bordure opposée à la voie de guidage (51) saillante.

5. Lève-vitre selon au moins une des revendications précédentes, **caractérisé en ce que** les voies de guidage (51, 52) de la partie de renfort (5) sont écartées l'une de l'autre selon une distance inférieure à la distance avec la voie de guidage (61) de la partie de support (6).

6. Lève-vitre selon au moins une des revendications précédentes, **caractérisé en ce que** la distance entre la partie de support (6) et la partie de renfort (5) est réglée au moyen d'empreintes et/ou bombements (41, 42, 43) dans la partie de support (6) et/ou dans la partie de renfort (5).

7. Lève-vitre selon au moins une des revendications précédentes, **caractérisé en ce que** la distance entre la partie de support (6) et la partie de renfort (5) est réglée au moyen d'un élément (8) séparé, disposé entre la partie de support (6) et la partie de renfort (5), et/ou au moyen d'une couche de mousse (9) reliant la partie de support (6) et la partie de renfort (5).

8. Lève-vitre selon au moins une des revendications précédentes, **caractérisé en ce que** la partie de support (6) et la partie de renfort (5) sont réalisées dans le même matériau ou dans un matériau similaire, **en ce que**, en cas d'utilisation du même matériau pour la partie de support (6) et la partie de renfort (5), la partie de renfort (5) a une plus grande épaisseur de matériau que la partie de support (6), et **en ce que**, en cas d'utilisation de matériaux similaires, la résistance de la partie de renfort (5) est supérieure à celle de la partie de support (6), en particulier la partie de renfort (5) est réalisée en acier à haute résistance ou en matière plastique renforcée par des fibres, et la partie de support (6) est réalisée en acier à faible résistance ou en matière plastique.

9. Lève-vitre selon au moins une des revendications précédentes 1 à 5, **caractérisé en ce que** la partie de support (5) et la partie de renfort (6) sont réalisées dans des matériaux différents, en particulier la partie de renfort (6) étant réalisée dans un métal avec un poids spécifique élevé, en particulier de l'acier, et la partie de support (5) étant réalisée en métal léger.

10. Lève-vitre selon la revendication 9, **caractérisé en ce que** la partie de renfort (6) est réalisée dans un alliage de magnésium coulé, en particulier avec une structure tridimensionnelle, et la partie de support (5) est réalisée dans une tôle métallique ou **en ce que** la partie de renfort (6) est réalisée en métal et la partie de support (5) est réalisée en matière plastique.

11. Lève-vitre selon au moins une des revendications précédentes, **caractérisé en ce que** les patins (31, 32, 33) sont montés de manière à pouvoir tourner autour de l'axe Y du véhicule automobile et à pouvoir pivoter autour d'un axe orienté perpendiculairement aux voies de guidage (51, 52, 61) et disposé sensiblement dans le plan de la vitre (1).

12. Lève-vitre selon la revendication 11, **caractérisé en ce qu'**au moins un patin (31, 32, 33) comporte une partie de guidage (34) avec des surfaces de glissement (310, 320, 330 ; 340) recevant la voie de guidage (51, 52, 61) et un trou oblong (341) conique, à travers lequel s'engage un boulon à rotule (36), dont la tête (361) est réalisée sous forme partiellement sphérique et est logée dans un évidement (343) partiellement sphérique de la partie de guidage (34), et dont le pied (362) est relié de manière fixe à l'entraîneur (2).

13. Lève-vitre selon la revendication 12, **caractérisé en ce qu'**entre l'entraîneur (2) et la partie de guidage (34) est disposé un coussinet (35), qui est apte à tourner autour du boulon à rotule (36) et dont le côté en appui contre la partie de guidage (34) forme avec la partie de guidage une surface de contact (342, 351) de forme cylindrique, **en ce qu'**entre le coussinet (35) et l'entraîneur (2) est agencé un élément à ressort (13), **en ce que** le trou oblong (341) conique de la partie de guidage (34), lequel reçoit le boulon à rotule (36), est disposé en étant décalé par rapport à la voie de guidage (51, 52, 61) et est réalisé en s'étendant uniquement dans une direction, et **en ce que** le trou oblong (341) conique de la partie de guidage (34) et la surface de contact (342, 351) cylindrique entre la partie de guidage (34) et le coussinet (35) autorisent seulement un sens de pivotement.
